# FASCICULE DE BREVET EUROPEEN

(11) **EP 1 409 096 B1**
(45) Date de publication et mention de la délivrance du brevet: **21.09.2005**
(21) Numéro de dépôt: 01972185.1
(22) Date de dépôt: 21.09.2001
(51) Int. Cl.: A63F 13/12, H04N 5/445, H04N 7/173

(54) **PROCEDE ET DISPOSITIF DE TELEVISION INTERACTIVE**
INTERAKTIVES FERNSEHVERFAHREN- UND GERÄT
INTERACTIVE TELEVISION METHOD AND DEVICE

(30) Priorité: 22.09.2000 FR 0012125
(43) Date de publication de la demande: 21.04.2004
(73) Titulaire: 121 PRODUCTIONS Société Anonyme, 75008 Paris (FR)
(72) Inventeur: 121 PRODUCTIONS Société Anonyme, 75008 Paris (FR)
(74) Mandataire: Pontet, Bernard
(86) Numéro de dépôt international: PCT/FR2001/002951
(87) Numéro de publication internationale: WO 2002/024289

(56) Documents cités:
- EP-A- 0 873 772
- WO-A-95/33342
- US-A- 5 423 555
- US-A- 5 936 661

## Description

La présente invention est relative à un procédé permettant de rendre interactive une émission télédiffusée. Elle concerne également un dispositif mettant en oeuvre ce procédé. L'invention trouve une application particulièrement avantageuse, mais non exclusivement, à la diffusion de jeux télévisés interactifs pour la télévision numérique. Elle vise également un système pour la mise en oeuvre de ce procédé.

Pour bénéficier de la télévision numérique, on peut s'équiper d'une parabole pour recevoir des émissions via un satellite, et d'un décodeur connecté à un téléviseur. A la place de la transmission via satellite, il existe notamment le câble ou encore le numérique hertzien. Pour fidéliser sa clientèle, une chaîne de télévision numérique peut proposer aux téléspectateurs de participer à des jeux interactifs. La plupart des décodeurs comprennent un modem pour la voie de retour vers un site central de diffusion. Cependant, les technologies actuelles ne permettent pas une gestion efficace en temps réel des réponses de chacun des téléspectateurs.

Pour qu'un jeu télévisé soit interactif, le flux vidéo visualisé par le téléspectateur doit pouvoir être individualisé. Pour cela, il faut que, soit le site central de diffusion diffuse un flux vidéo individualisé vers chacun des téléspectateurs, ce qui ne semble pas possible à l'heure actuelle, soit que le site central de diffusion diffuse simultanément une pluralité de flux vidéo distincts et que chaque décodeur se charge de n'afficher que le flux vidéo adapté au téléspectateur correspondant. Or, pour ce deuxième cas les décodeurs actuels possèdent une très faible capacité de mémoire, de l'ordre de quatre cents kilooctets, ne leur permettant pas de gérer, dans un même canal, des flux vidéo possédant une bande passante vidéo de l'ordre de cinq mégaoctets.

La présente invention vise à remédier à ces inconvénients en proposant un procédé de télévision interactive, entre un site central de diffusion et une pluralité de sites locaux équipés de récepteurs de télévision pourvus de décodeurs prévus pour recevoir des flux vidéo codés numériquement.

Selon l'invention, ce procédé comprend la diffusion, depuis le site central de diffusion, d'un flux vidéo correspondant, dans certains créneaux temporels prédéterminés, à un assemblage spatial de plusieurs séquences vidéo simultanées, l'image visualisée résultant de cet assemblage comportant au moins autant de zones que de séquences vidéo. En outre, en chaque site local de réception, on exécute des étapes de masquage d'une ou plusieurs des zones de l'image visualisée par des images de masquage, ces étapes de masquage étant synchronisées avec les créneaux temporels prédéterminés et exécutées au sein du décodeur en réponse à des consignes de validation émises par des moyens de télécommande.

En d'autres termes, on transmet une image vidéo composée en fait de plusieurs sous-images vidéo, ou séquences vidéo, incrustées. Sur l'écran, on visualise plusieurs zones affichant chacune une des séquences vidéo. La consigne de validation peut être un signal transmis depuis une télécommande du décodeur au moyen des touches ou flèches directionnelles de cette télécommande.

Avec un tel procédé, le site central peut diffuser un flux vidéo pré-formaté composé de plusieurs séquences vidéo différentes, et le décodeur n'effectue pas une sélection de séquences vidéo, mais effectue un masquage. Chaque téléspectateur voit, affichée sur son écran de télévision, une séquence vidéo correspondant à son choix exprimé au moyen de la télécommande. Le téléspectateur a l'impression d'être directement en interactivité avec le site central de diffusion, alors qu'en réalité, tout s'exécute en local dans son décodeur.

Les images de masquage peuvent comprendre des images fixes de faible capacité. De préférence, on utilise des images produites par la technologie "OSD", pour On Screen Display en langue anglaise, généralement utilisées pour l'affichage des paramètres de réglages (volume, contraste, ...) d'un téléviseur par exemple. On peut citer la technique de masquage sur des signaux de type MPEG2 selon le document wo9533342. Cette technique permet de remplacer des pixels d'une première source vidéo par des pixels d'une seconde source vidéo, ce remplacement étant facilité par l'adressage spécifique des signaux MPEG2.

Pour gérer ces images de masquage, on utilise une application interactive autonome comprise dans des moyens de stockage du décodeur.

Selon une caractéristique avantageuse de l'invention, on télécharge les images de masquage ainsi que l'application interactive dans des moyens de stockage du décodeur dès le début de diffusion du flux vidéo. Par ailleurs, les créneaux temporels prédéterminés peuvent être prédéfinis dans l'application interactive, c'est-à-dire que l'application interactive est un logiciel qui intègre ces créneaux temporels. Autrement, on peut imaginer que ces créneaux temporels sont définis par des signaux de synchronisation transmis instantanément par le site central. Ces signaux de synchronisation permettent qu'une image de masquage soit affichée durant un créneau temporel prédéterminé en évitant tout débordement temporel. Toutefois, l'application interactive peut comprendre des moyens logiciels pour palier aux débordements temporels par affichage par exemple d'image de masquage de temporisation. On peut aussi envisager d'autres moyens de synchronisation prédéfinis dans le décodeur.

L'application interactive est de préférence un logiciel pouvant être mis en oeuvre au moyen de la plupart de moteurs d'interactivité existants, tels que par exemple, Media Highway®, Open TV® ou encore Liberate®.

L'émission peut être télédiffusée via un satellite, via un réseau câblé, via un réseau hertzien numérique ou encore via un réseau de communication de type Internet, par exemple en réception sur un poste de télévision de type Web TV® dans la mesure où le débit de transmission le permet.

Le flux vidéo peut comprendre en outre pour chaque séquence vidéo, au moins une bande sonore. Ainsi on peut bloquer la diffusion audio de la bande sonore relative à la séquence vidéo dont la zone de l'image visualisée est masquée par une image de masquage. Le téléspectateur perçoit la bande sonore correspondant à la séquence vidéo visualisée sur son écran.

Par ailleurs, on peut transmettre ultérieurement les consignes de validation vers le site central de diffusion. Lorsqu'il s'agit d'un jeu interactif, les consignes de validation peuvent permettre de gagner des jetons qui sont ensuite sauvegardés dans des moyens de stockage du décodeur de façon conventionnelle. On peut gagner tout autre type de dotation, ou par exemple une participation à un tirage au sort.

Suivant un autre aspect de l'invention, il est proposé un dispositif pour recevoir un flux vidéo d'une émission télédiffusée à partir d'un site central de diffusion et pour permettre la visualisation, sur un écran d'un récepteur de télévision, d'une image visualisée résultant de la diffusion du flux vidéo. Ce dispositif comprend des moyens de stockage contenant :
- une pluralité d'images de masquage,
- une consigne de validation provenant de moyens de télécommande,
- une application interactive capable de gérer l'affichage de ces images de masquage pour masquer au moins une séquence vidéo parmi une pluralité de séquences vidéo destinées à être simultanément visualisées à l'écran, en fonction de la consigne de validation et d'un créneau temporel prédéterminé.

Par ailleurs, le dispositif selon l'invention peut comprendre en outre des moyens de connexion tels qu'un modem pour se connecter au site central de diffusion et transmettre la consigne de validation.

Ce dispositif peut également comprendre des moyens de réception de créneaux temporels transmis par le site central et des moyens de synchronisation des images de masquage à ces créneaux temporels.

L'invention concerne également un système de télévision numérique comprenant :
- un site central de diffusion diffusant un flux vidéo vers une pluralité de récepteurs de télévision, et
- un décodeur pour chaque récepteur de télévision pour faire transiter le flux vidéo vers le récepteur de télévision correspondant.

Chaque décodeur est apte à gérer l'affichage d'images de masquage pour masquer au moins une séquence vidéo parmi une pluralité de séquences vidéo destinées à être simultanément visualisées à l'écran, en fonction de la consigne de validation et d'un créneau temporel prédéterminé.

Le décodeur peut être un élément interne du récepteur de télévision.

L'invention concerne encore un procédé pour le formatage d'un flux vidéo destiné à être diffusé par un site central de diffusion vers une pluralité de décodeurs pour une émission interactive. Selon l'invention, le flux vidéo est subdivisé en une pluralité de créneaux temporels. Dans certains créneaux temporels prédéterminés, le flux vidéo consiste en un assemblage d'une pluralité de séquences vidéo destinées à être visualisées simultanément sur un écran. On élabore des images de masquage capables de masquer au moins une de ces séquences vidéo en fonction des créneaux temporels prédéterminés et en réponse à une consigne de validation.

On associe à chaque séquence vidéo une bande sonore spécifique.

On diffuse également un flux de données dans lequel on intègre, dès le début de la diffusion, une application interactive téléchargeable dans chaque décodeur et apte à gérer l'affichage des images de masquage.

Les créneaux temporels et les images de masquage peuvent être transmis via le flux de données.

Par ailleurs, on diffuse également, à intervalles de temps réguliers, des signaux de synchronisation permettant à l'application interactive de gérer l'affichage des images de masquage.

On prévoit également des créneaux temporels d'attente au cours desquels l'application interactive reste en attente d'une consigne de validation permettant de déterminer l'image de masquage à afficher. Au cours d'un jeu, ces créneaux servent à présenter une question et attendre que le téléspectateur réponde au moyen de sa télécommande.

Avec un tel système, plusieurs téléspectateurs peuvent intervenir au cours d'une même émission et visualiser indépendamment une séquence vidéo en fonction de leur intervention sur la télécommande.

D'autres avantages et caractéristiques de l'invention apparaîtront à l'examen de la description détaillée d'un mode de mise en oeuvre nullement limitatif et des dessins annexés, sur lesquels :
- la figure 1 est un schéma simplifié de l'architecture matérielle mise en oeuvre dans la présente invention;
- la figure 2 est un organigramme des principales étapes du procédé selon l'invention;
- la figure 3 illustre différentes points de vue lorsqu'une présentatrice pose une question à deux réponses;
- la figure 4 illustre la correspondance entre les images diffusées, les images visualisées et les images de masquage "OSD" lorsque le téléspectateur fournit une réponse "VRAI" et lors de la visualisation du résultat;
- la figure 5 illustre la correspondance entre les images diffusées, les images visualisées et les images de masquage "OSD" lorsque le téléspectateur fournit une réponse "FAUX" et lors de la visualisation du résultat;
- la figure 6 illustre la correspondance entre les images diffusées, les images visualisées et les images de masquage "OSD", pour une question à laquelle la présentatrice propose trois réponses au choix, et lorsque le téléspectateur fournit une réponse "A" et lors de la visualisation du résultat;
- la figure 7 correspond à la même question que sur la figure 6, mais dans le cas où le téléspectateur fournit une réponse "B"; et
- la figure 8 correspond à la même question que sur la figure 6, mais dans le cas où le téléspectateur fournit une réponse "C".

Bien que l'invention n'y soit pas limitée, on va maintenant décrire un exemple de mise en oeuvre du procédé selon l'invention pour un jeu interactif, plus précisément un jeu dans lequel un présentateur ou une présentatrice pose une question et le téléspectateur doit répondre par "vrai" ou "faux" en appuyant sur les touches "1" ou "2" de sa télécommande.

Le présent exemple peut se présenter dans le cadre d'un jeu organisé par une chaîne de télévision numérique de diffusion de films. Le téléspectateur commande de visualiser un film. Avant la visualisation de ce film, la chaîne lui propose de participer au jeu pour pouvoir gagner des jetons susceptibles de lui faire gagner un second film. Ce jeu peut être intégré dans une émission de divertissement basée sur le cinéma par exemple, ou être défini comme un programme fonctionnant de façon autonome.

A chaque question-réponse, le téléspectateur gagne ou non des jetons qui sont comptabilisés puis sauvegardés pour être cumulés avec des jetons que le téléspectateur pourrait gagner ultérieurement.

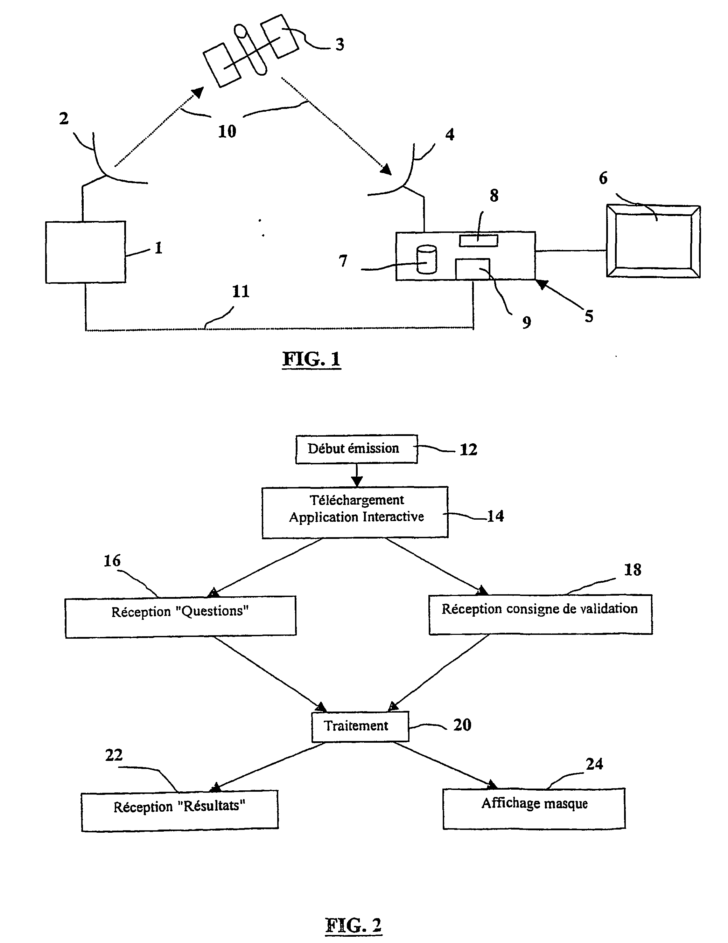

On voit sur la figure 1, de façon très schématique, un site central de diffusion 1 diffusant une émission relative au jeu et affichée sur le téléviseur 6 du téléspectateur. L'émission est diffusée sous forme de flux vidéo 10 passant via une antenne d'émission 2, un satellite 3 et une antenne de réception 4 disposée chez le téléspectateur. Les flux vidéo reçus par l'antenne 4 sont traités par un décodeur 5 avant d'être affichés sur le téléviseur 6. Le décodeur 5 comprend des éléments essentiels et conventionnels pour le décryptage des flux vidéo numériques, mais dispose en particulier d'une mémoire 7, d'un microprocesseur 8 et d'un modem 9 aptes à exécuter le procédé selon l'invention. La mémoire 7 stocke notamment l'application interactive gérant le procédé selon l'invention et des images de masquage, en particulier des images de faibles capacités de technologie "OSD" (On Screen Display). Le microprocesseur 8 est apte à exécuter l'application interactive et gérer une consigne de validation provenant de la télécommande du téléspectateur. Le modem 9 permet de transmettre si nécessaire des données vers le site central de diffusion 1 via un réseau téléphonique commuté 11 ou tout autre réseau de communication.

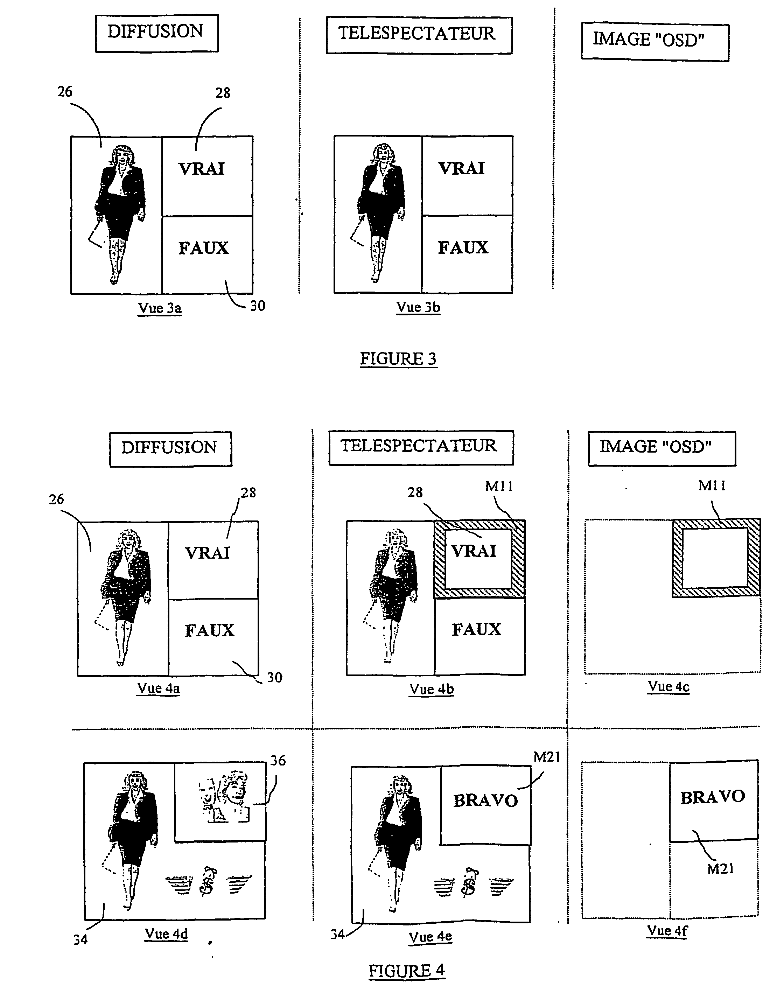

On va maintenant décrire le déroulement du jeu selon l'invention en référence aux figures 2 et 3. L'organigramme de la figure 2 illustre des étapes exécutées par le décodeur, en particulier par l'application interactive. Tel qu'illustré sur cet organigramme, au début 12 de l'émission, correspondant par exemple au générique de présentation du jeu, le décodeur 5 télécharge à l'étape 14 l'application interactive via un flux de données diffusé par le site de transmission.

Cette application est mise en oeuvre par le processeur 8. En même temps que l'application interactive, on télécharge des images de masquage, en fait ce sont des données permettant la génération d'images "OSD" prédéterminées, par exemple des images obtenues par commande de pixels prédéterminés. On télécharge également des créneaux temporels C1 et C2, relatifs à des moments privilégiés : C1 peut correspondre au moment où l'on pose la question et le téléspectateur effectue son choix, et C2 peut correspondre au moment où le résultat est affiché.

L'application interactive comprend les informations nécessaires mettant en relation les créneaux temporels, les images de masquage et les consignes de validation possibles. Ces informations peuvent être représentées dans le tableau suivant :

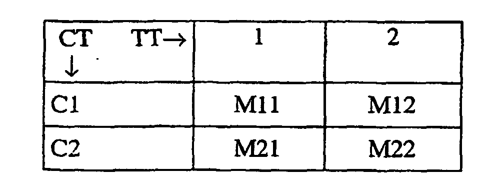

Avec
TT : Touches Télécommande
CT : Créneaux Temporels
Mii : Image de masquage

Par exemple, avec ce tableau, l'application interactive sait que la touche "1" permet d'afficher l'image de masquage M11 au moment de la question C1, et permet d'afficher l'image de masquage M21 au moment du résultat C2, tout en sachant que, comme on le verra plus loin, en C1 le traitement est immédiat, alors qu'en C2 le traitement est différé.

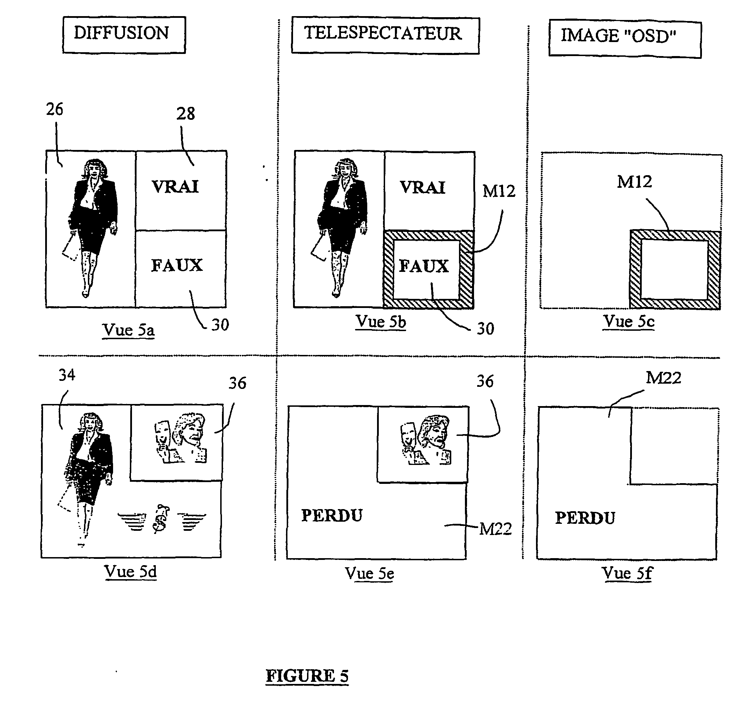

A l'étape 16 correspondant au créneau temporel C1, le décodeur reçoit un flux vidéo permettant d'afficher simultanément trois séquences vidéo 26, 28 et 30 conformément à la figure 3. La séquence vidéo 26 illustre un personnage qui pose une question dont les réponses possibles sont "VRAI", séquence vidéo 28, ou "FAUX", séquence vidéo 30. L'image diffusée et l'image visualisée par le téléspectateur sont identiques puisque aucune image de masquage n'est affichée. Toujours au cours de C1, le décodeur se met en attente de réception d'une consigne de validation provenant de la télécommande du décodeur. Lorsqu'à l'étape 18, le téléspectateur appuie par exemple sur la touche "1" de sa télécommande, l'application interactive traite instantanément cette consigne de validation et affiche l'image de masquage M11. Ainsi sur la figure 4, vues 4a, 4b et 4c, l'image diffusée diffère de l'image visualisée qui comprend un cadre M11 se superposant à l'image 28. Le téléspectateur voit instantanément la réponse choisie : "VRAI". Le créneau C1 comprend une durée suffisante pour que le téléspectateur puisse rectifier sa réponse s'il pense s'être trompé et appuyer par exemple sur la touche "2" pour "FAUX" conformément à la figure 5, vues 5a, 5b et 5c. Dans ce cas l'image de masquage M12 se superpose à l'image diffusée 30.

Au terme du créneau C1, à l'étape 20, l'application interactive prend en compte le dernier choix du téléspectateur, par exemple "VRAI" (touche "1") sur la vue 4b de la figure 4. Le traitement consiste à déterminer l'image de masquage qu'il sera nécessaire d'afficher au cours du déroulement du créneau C2 qui correspond à des séquences vidéo affichant les résultats. D'après le tableau ci-dessus, la touche "1" pour le créneau temporel C2 donne l'image de masquage M21. A l'étape 22, le décodeur reçoit un flux vidéo "Résultats" comprenant, conformément à la vue 4d, une séquence vidéo 34 correspondant à un message félicitant le téléspectateur d'avoir trouvé la bonne réponse, et simultanément dans le même flux vidéo une séquence vidéo 36 indiquant au téléspectateur qu'il a effectué le mauvais choix. A chaque séquence vidéo est associée une piste sonore. En supposant que "VRAI" soit la bonne réponse, si le téléspectateur a sélectionné "VRAI" (touche "1"), ce téléspectateur visualise, à l'étape 24, sur son écran l'image représentée sur la vue 4e, c'est-à-dire la séquence vidéo 34, alors que la séquence vidéo 36 est masquée par l'image de masquage M21. Les deux étapes 22 et 24 sont synchrones, et on peut prévoir que le site central de diffusion transmette des signaux de synchronisation permettant à l'application interactive de respecter efficacement ce synchronisme entre les étapes 22 et 24. Le téléspectateur a ainsi l'impression que le site central a vérifié sa réponse et lui a retourné un résultat conforme à cette réponse, alors qu'en réalité le traitement est effectué en local par l'application interactive en utilisant un procédé de masquage par image "OSD".

Pareillement, si le téléspectateur répond par "FAUX" comme visualisé sur la vue 5b de la figure 5, le traitement de l'application interactive aboutira à l'image de masquage M22 et le téléspectateur visualisera l'image de la vue 5e.

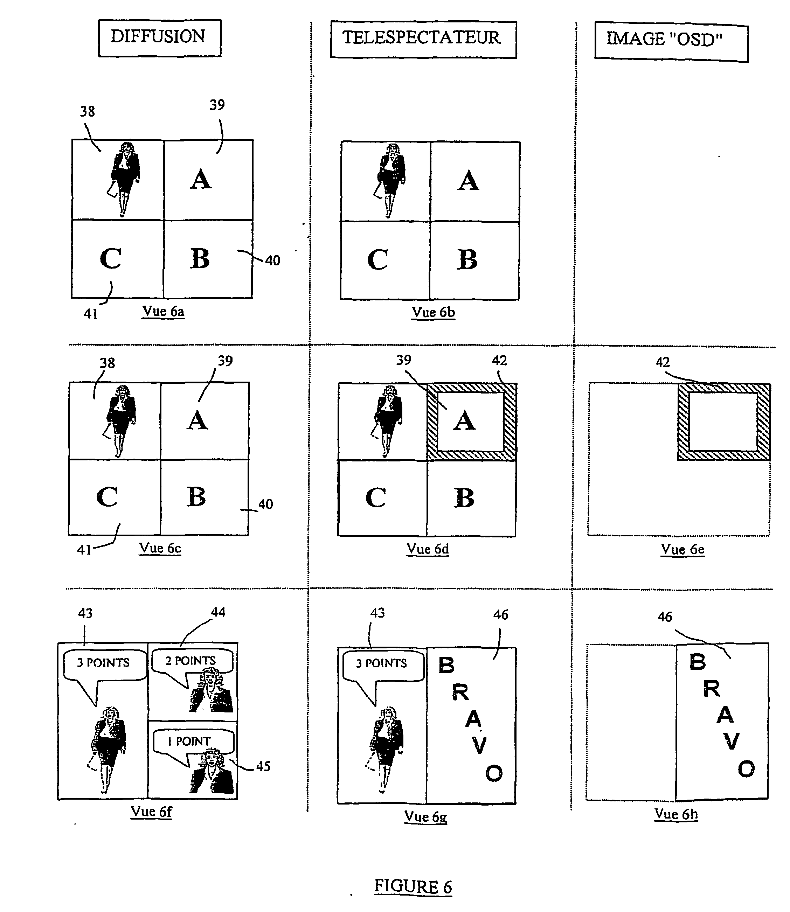

Sur les figures 6 à 8 on illustre un exemple dans lequel une présentatrice, dans la séquence vidéo 38 pose une question pour laquelle trois réponses sont possibles, ces trois réponses étant présentées par "A", "B" et "C" dans trois séquences vidéo 39, 40 et 41 conformément aux vues 6a et 6b. Ainsi, le flux vidéo comporte quatre séquences vidéo assemblées. Les vues 6c, 6d, 6e, 7a, 7b, 7c, 8a, 8b et 8c correspondent au moment où le téléspectateur est invité à effectuer un choix au moyen de sa télécommande.

Les vues 6c, 6d, 6e sur la figure 6 représentent le cas où le téléspectateur choisit la réponse "A" qui est prédéfinie comme réponse la plus favorable. Pour symboliser son choix, on encadre la réponse "A" (vue 6d) au moyen d'une image "OSD" 42. Au moment de la présentation des résultats (vues 6f, 6g et 6h), le site central transmet dans tous les cas, comme on le verra pour les réponses "B" et "C", un flux vidéo formaté dans lequel sont incrustées trois séquences vidéo 43, 44 et 45. La séquence vidéo 43 correspond à la réponse la plus favorable, c'est-à-dire "A". Dans ce cas, l'application interactive fait en sorte que le téléspectateur ne voit que cette séquence 43 en masquant les deux autres séquences 44 et 45 au moyen d'une image "OSD" 46 conformément à la vue 6g.

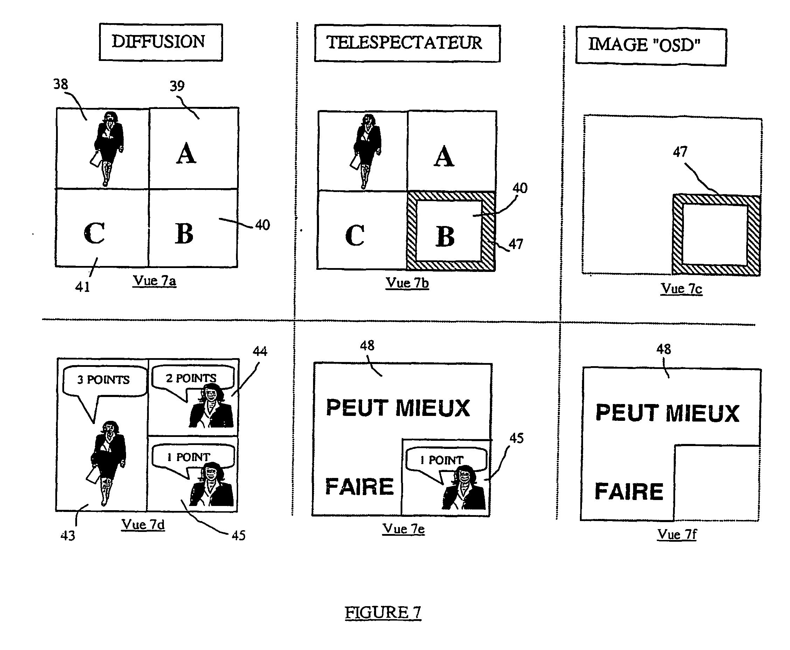

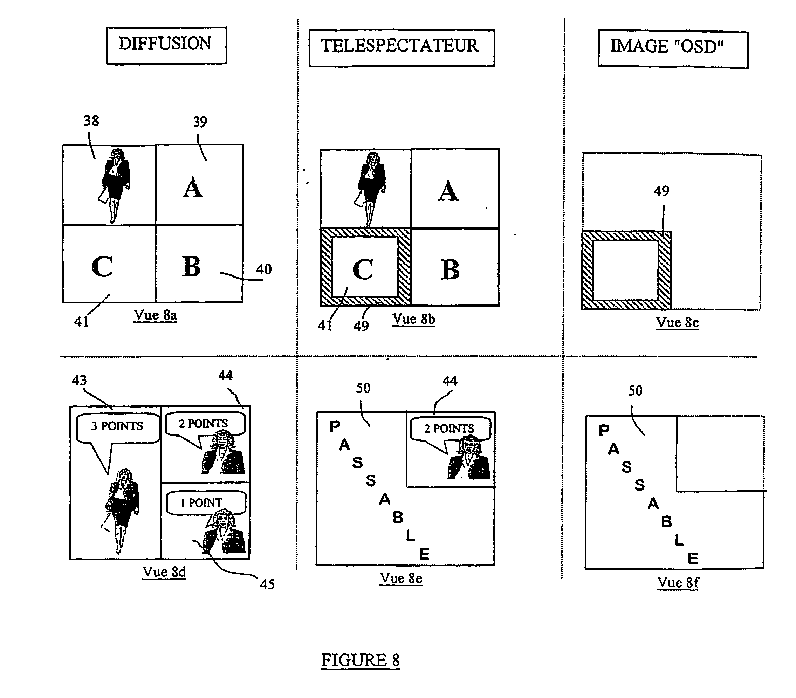

Les vues 7a, 7b, 7c sur la figure 7 représentent le cas où le téléspectateur choisit la réponse "B" qui est prédéfinie comme réponse la moins favorable. Pour symboliser son choix, on encadre la réponse "B" (vue 7b) au moyen d'une image "OSD" 47. Au moment de la présentation des résultats (vues 7d, 7e et 7f), le site central transmet donc le flux vidéo illustré sur les vues 6f (fig. 6), 7d (fig. 7) et 8d (fig.8). La séquence vidéo 45 correspond à la réponse la moins favorable, c'est-à-dire "B". Dans ce cas, l'application interactive fait en sorte que le téléspectateur ne voit que cette séquence 45 en masquant les deux autres séquences 44 et 43 au moyen d'une image "OSD" 48 conformément à la vue 7e.

Enfin, les vues 8a, 8b, 8c sur la figure 8 représentent le cas où le téléspectateur choisit la réponse "C" qui est prédéfinie comme réponse moyenne, passable. Pour symboliser son choix, on encadre la réponse "C" (vue 8b) au moyen d'une image "OSD" 49. Au moment de présentation des résultats (vues 8d, 8e et 8f), le site central transmet donc le flux vidéo illustré sur les vues 6f, 7d et 8d. La séquence vidéo 44 correspond à la réponse moyenne, c'est-à-dire "C". Dans ce cas, l'application interactive fait en sorte que le téléspectateur ne voit que cette séquence 44 en masquant les deux autres séquences 45 et 43 au moyen d'une image "OSD" 50 conformément à la vue 8e.

On peut réaliser ainsi une série de plusieurs questions-réponses et à la fin de la série, l'application interactive comptabilise les bonnes réponses qui sont transformées en des jetons. Ces jetons, cumulables, sont sauvegardés dans le décodeur et le téléspectateur peut obtenir un film gratuit par exemple.

Bien sûr, l'invention n'est pas limitée aux exemples qui viennent d'être décrits et de nombreux aménagements peuvent être apportés à ces exemples sans sortir du cadre de l'invention. On peut notamment appliquer le procédé selon l'invention pour un reportage ou un film multi-scénarios ou multi-angles de vue. Pour un film multi-scénarios par exemple, on peut prévoir de proposer quatre scénarios aux téléspectateurs qui peuvent alors sélectionner un des quatre choix visualisés sur quatre parties de leur écran, le scénario sélectionné par chaque téléspectateur pouvant ensuite de dérouler sur tout l'écran. L'invention peut être appliquée en particulier, mais non limitativement, aux programmes du type quizz déclinés dans de nombreux domaines tels que le cinéma, la musique, le sport, mais peut également trouver des applications dans les tests de personnalité ou dans le domaine de la fiction interactive.

## Revendications

1. Procédé de télévision interactive, entre un site central de diffusion (1) et une pluralité de sites locaux équipés de récepteurs de télévision (6) pourvus de décodeurs (5) prévus pour recevoir des flux vidéo (10) codés numériquement, **caractérisé en ce qu'**il comprend :
- depuis le site central de diffusion, une diffusion d'un flux vidéo correspondant, dans certains créneaux temporels prédéterminés, à un assemblage spatial de plusieurs séquences vidéo simultanées (43, 44, 45), l'image visualisée résultant de cet assemblage comportant au moins autant de zones que de séquences vidéo, et
- en chaque site local de réception, des étapes de masquage d'une ou plusieurs desdites séquences vidéo, par des images de masquage (42, 46, 47, 50), ces étapes étant synchronisées avec lesdits créneaux temporels prédéterminés et exécutées au sein du décodeur (5) en réponse à des consignes de validation émises par des moyens de télécommande.

2. Procédé selon la revendication 1, **caractérisé en ce qu'**on exécute les étapes de masquage au moyen d'une application interactive comprise dans des moyens de stockage du décodeur.

3. Procédé selon la revendication 2, **caractérisé en ce qu'**on télécharge l'application interactive dans des moyens de stockage du décodeur dès le début de diffusion du flux vidéo.

4. Procédé selon l'une des revendications 2 ou 3,
**caractérisé en ce que** les créneaux temporels prédéterminés sont prédéfinis dans l'application interactive.

5. Procédé selon l'une quelconque des revendications 1 à 3, **caractérisé en ce qu'**on définit les créneaux temporels prédéterminés par des signaux de synchronisation transmis instantanément par le site central de diffusion.

6. Procédé selon l'une quelconque des revendications précédentes, **caractérisé en ce que** les images de masquage comprennent des images fixes de faible capacité.

7. Procédé selon l'une quelconque des revendications précédentes, **caractérisé en ce qu'**on télécharge les images de masquage dans des moyens de stockage du décodeur dès le début de diffusion du flux vidéo.

8. Procédé selon l'une quelconque des revendications précédentes, **caractérisé en ce qu'**on diffuse le flux vidéo via un satellite.

9. Procédé selon l'une quelconque des revendications 1 à 7, **caractérisé en ce qu'**on diffuse le flux vidéo via un réseau câblé.

10. Procédé selon l'une quelconque des revendications 1 à 7, **caractérisé en ce qu'**on diffuse le flux vidéo via un réseau hertzien numérique.

11. Procédé selon l'une quelconque des revendications 1 à 7, **caractérisé en ce qu'**on diffuse le flux vidéo via un réseau de communication tel que l'Internet.

12. Procédé selon l'une quelconque des revendications précédentes, **caractérisé en ce que** le flux vidéo comprend en outre pour chaque séquence vidéo au moins une bande sonore.

13. Procédé selon la revendication 12, **caractérisé en ce qu'**on bloque la diffusion audio de la bande sonore relative à la séquence vidéo dont la zone de l'image visualisée est masquée par une image de masquage.

14. Procédé selon l'une quelconque des revendications précédentes, **caractérisé en ce qu'**on transmet ultérieurement les consignes de validation vers le site central de diffusion.

15. Dispositif pour recevoir un flux vidéo d'une émission télédiffusée à partir d'un site central de diffusion (1) et pour permettre la visualisation, sur un écran d'un récepteur de télévision (6), d'une image visualisée résultant de la diffusion du flux vidéo (10), **caractérisé en ce qu'**il comprend des moyens pour stocker:
- une pluralité d'images de masquage (42, 46, 47, 48, 50),
- une consigne de validation provenant de moyens de télécommande,
- une application interactive capable de gérer l'affichage de ces images de masquage pour masquer au moins une séquence vidéo parmi une pluralité de séquences vidéo (43, 44, 45) destinées à être simultanément visualisées à l'écran, en fonction de la consigne de validation et d'un créneau temporel prédéterminé.

16. Dispositif selon la revendication 15, **caractérisé en ce qu'**il comprend en outre des moyens de connexion pour se connecter au site central de diffusion et transmettre ladite consigne de validation.

17. Dispositif selon l'une des revendications 15 et 16,
**caractérisé en ce qu'**il comprend en outre des moyens de réception de créneaux temporels transmis par le site central et des moyens de synchronisation des images de masquage à ces créneaux temporels.

18. Système de télévision numérique pour la mise en oeuvre du procédé selon l'une quelconque des revendications précédentes, comprenant :
- un site central de diffusion (1) diffusant un flux vidéo (10) vers une pluralité de récepteurs de télévision(6), et
- un décodeur (5) associé à chaque récepteur de télévision pour faire transiter le flux vidéo vers le récepteur de télévision correspondant,
**caractérisé en ce que** chaque décodeur est apte à gérer l'affichage d'images de masquage (42, 46, 47, 50) pour masquer au moins une séquence vidéo parmi une pluralité de séquences vidéo (43, 44, 45) destinées à être simultanément visualisées à l'écran, en fonction de la consigne de validation et d'un créneau temporel prédéterminé.

19. Système selon la revendication 18, **caractérisé en ce que** le décodeur est un élément interne du récepteur de télévision.

20. Procédé pour le formatage d'un flux vidéo (10) destiné à être diffusé par un site central de diffusion (1) vers une pluralité de décodeurs (5) pour une émission interactive, mis en oeuvre dans un système selon l'une des revendications 18 ou 19, **caractérisé en ce que** le flux vidéo est subdivisé en une pluralité de créneaux temporels, pour certains créneaux temporels prédéterminés, le flux vidéo consiste en un assemblage d'une pluralité de séquences vidéo (43, 44, 45) destinées à être visualisées simultanément sur un écran, on élabore des images de masquage (42, 46, 47, 50) capables de masquer au moins une de ces séquences vidéo en fonction des créneaux temporels prédéterminés et en réponse à une consigne de validation.

21. Procédé selon la revendication 20, **caractérisé en ce qu'**on associe à chaque séquence vidéo une bande sonore spécifique

22. Procédé selon l'une des revendications 20 et 21, **caractérisé en ce qu'**on diffuse également un flux de données dans lequel on intègre, dès le début de la diffusion, une application interactive téléchargeable dans chaque décodeur et apte à gérer l'affichage des images de masquage.

23. Procédé selon la revendication 22, **caractérisé en ce que** les créneaux temporels et les images de masquage sont transmis via le flux de données.

24. Procédé selon l'une des revendications 22 et 23, **caractérisé en ce qu'**on diffuse également, à intervalles de temps réguliers, des signaux de synchronisation permettant à l'application interactive de gérer l'affichage des images de masquage.

25. Procédé selon l'une des revendications 22 à 24, **caractérisé en ce qu'**on détermine des créneaux temporels d'attente au cours desquels l'application interactive reste en attente d'une consigne de validation permettant de déterminer une image de masquage à afficher.

## Patentansprüche

1. Verfahren für die interaktive Teilnahme an Fernsehsendungen, zwischen einer Sendezentrale (1), und einer Vielzahl von lokalen Sendestellen, die mit Fernsehempfängern (6) ausgerüstet sind, die ihrerseits mit Dekodern (5) für den Empfang digital codierter Videoströmen (10) ausgestattet sind.
- Von der Sendezentrale aus wird ein Videostrom ausgestrahlt, der in bestimmten vorbestimmten Zeitfenstern einem räumlichen Aufbau aus mehreren gleichzeitigen Videosequenzen (43, 44, 45) entspricht. Das auf dem Bildschirm erscheinende Bild, das aus diesem Aufbau resultiert, besteht mindestens aus ebensovielen Zonen wie Videosequenzen, und
- in jeder lokalen Empfangsstelle, Einzelschritten zur Maskierung einer oder mehrerer der genannten Videosequenzen durch Maskenbilder (42, 46, 47, 50). Diese Einzelschritte werden mit den genannten vorbestimmten Zeitfenstern synchronisiert und innerhalb des Dekoders (5) auf die Validierungszeichen durch die Fernbedienung hin ausgeführt.

2. Verfahren gemäß Anspruch 1, nach dem die Etappen der Maskierung mittels einer in den Speichermitteln des Dekoders enthaltenen interaktiven Anwendung ausgeführt werden.

3. Verfahren gemäß Anspruch 2, das **dadurch gekennzeichnet ist, dass** die in den Speichermitteln des Dekoders enthaltene interaktive Anwendung von Beginn der Übertragung des Videostroms an heruntergeladen werden kann.

4. Verfahren gemäß einer der Ansprüche 2 oder 3, nach dem die vorbestimmten Zeitfenster in der interaktiven Anwendung vordefiniert sind.

5. Verfahren nach irgendeinem der Ansprüche 1 bis 3, das **dadurch gekennzeichnet ist, dass** die vorbestimmten Zeitfenster durch Synchronisierungssignale definiert werden, die augenblicklich von der Sendezentrale übertragen werden.

6. Verfahren nach irgendeinem der oben genannten Ansprüche, das **dadurch gekennzeichnet ist, dass** die Maskenbilder feste Bilder von schwacher Kapazität enthalten.

7. Verfahren nach irgendeinem der oben genannten Ansprüche, nach dem die in den Speichermitteln des Dekoders enthaltenen Maskenbilder von Beginn der Übertragung des Videostromes an heruntergeladen werden.

8. Verfahren nach irgendeinem der oben genannten Ansprüche, nach dem der Videostrom über einen Satelliten ausgestrahlt wird.

9. Verfahren nach irgendeinem der Ansprüche 1 bis 7, nach dem der Videostrom über ein Kabelnetz ausgestrahlt wird.

10. Verfahren nach irgendeinem der Ansprüche 1 bis 7, nach dem der Videostrom über ein Hertz-Digitalnetz ausgestrahlt wird.

11. Verfahren nach irgendeinem der Ansprüche 1 bis 7, nach dem der Videostrom über ein Kommunikationsnetz wie das Internet ausgestrahlt wird.

12. Verfahren nach irgendeinem der oben genannten Ansprüche, nach dem der Videostrom außerdem für jede Videosequenz mindestens eine Tonspur enthält.

13. Verfahren gemäß Anspruch 12, nach dem die Tonübertragung der Tonspur, die zu der Videosequenz gehört, deren auf dem Bildschirm erscheinende Bildzone durch ein Maskenbild maskiert ist, blockiert wird.

14. Verfahren nach irgendeinem der oben genannten Ansprüche, nach dem die Validierungszeichen im nachhinein an eine Sendezentrale übertragen werden.

15. Vorrichtung zum Empfang eines Videostromes einer von einer Sendezentrale (1) aus ausgestrahlten Fernsehsendung, durch die auch das Erscheinen eines visualisierten Bildes, das aus der Übertragung des Videostromes (10) resultiert, auf dem Bildschirm eines Fernsehempfängers (6) ermöglicht wird. Diese Vorrichtung ist durch Mittel zum Speichern der folgenden Elemente **gekennzeichnet**:
- Speicherung einer Vielzahl von Maskenbildern (42, 46, 47, 48, 50),
- Speicherung eines Validierungszeichens von der Fernbedienung;
- Speicherung einer interaktiven Anwendung, die in der Lage ist, die Anzeige dieser Maskenbilder zu steuern, um mindestens eine Videosequenz aus einer Vielzahl von Videosequenzen (43, 44, 45), die gleichzeitig nach dem Validierungszeichen und einem vorbestimmten Zeitfenster auf dem Bildschirm erscheinen sollen, zu maskieren.

16. Vorrichtung gemäß Anspruch 15, die **dadurch gekennzeichnet ist, dass** sie außerdem Verbindungsteile für den Anschluss an die Sendezentrale und für die Übertragung des genannten Validierungszeichens enthält.

17. Vorrichtung gemäß den Anspruchen 15 und 16, die sich **dadurch kennzeichnet, dass** sie außerdem Mittel zum Empfang der von der Sendezentrale übertragenen Zeitfenster sowie Mittel für die Synchronisierung der Maskenbilder mit diesen Zeitfenstern enthält.

18. digitales Fernsehsystem zur Umsetzung des Verfahrens nach irgendeinem der genannten Ansprüche, das aus den folgenden Elementen besteht:
- einer Sendezentrale (1), von der ein Videostrom (10) an eine Vielzahl von Fernsehempfängern (6) ausgestrahlt wird; und
- einem Dekoder (5), der mit jedem Fernsehempfänger verbunden ist, um den Videostrom an den entsprechenden Fernsehempfänger weiterzuleiten. Dieses System ist **dadurch gekennzeichnet, dass** jeder Dekoder in der Lage ist, die Anzeige der Maskenbilder (42, 46, 47, 50) zu steuern, um mindestens eine Videosequenz aus einer Vielzahl von Videosequenzen (43, 44, 45), die gleichzeitig auf dem Bildschirm erscheinen sollen, auf das Validierungszeichen hin und in einem vorbestimmten Zeitfenster zu maskieren.

19. System gemäß Anspruch 18, nach dem der Dekoder ein Element ist, das in den Fernsehempfänger eingebaut ist.

20. Verfahren zur Formatierung eines Videostroms (10), der von einer Sendezentrale (1) aus an eine Vielzahl von Dekodern (5) für eine interaktive Sendung ausgestrahlt werden soll. Dieses Verfahren wird nach einem System gemäß einem der Ansprüche 18 oder 19 umgesetzt, welches **dadurch gekennzeichnet ist, dass** der Videostrom in eine Vielzahl von Zeitfenstern unterteilt wird, wobei der Videostrom bei bestimmten vorbestimmten Zeitfenstern aus einem Aufbau aus einer Vielzahl von Videosequenzen (43, 44, 45) besteht, die gleichzeitig auf einem Bildschirm erscheinen sollen. Hierbei werden Maskenbilder (42, 46, 47, 50) entwickelt, die in der Lage sind, mindestens eine dieser Videosequenzen je nach den vorbestimmten Zeitfenstern und auf ein Validierungszeichen hin zu maskieren.

21. Verfahren gemäß Anspruch 20, nach dem jeder Videosequenz eine spezifische Tonspur zugeordnet wird.

22. Verfahren, nach einem der Ansprüche 20 und 21, nach dem auch ein Datenstrom übertragen wird, in den von Beginn der Ausstrahlung an eine herunterladbare interaktive Anwendung in jeden Dekoder integriert wird, durch die die Anzeige der Maskenbilder gesteuert werden kann.

23. Verfahren nach Anspruch 22, nach dem die Zeitfenster und die Maskenbilder über einen Datenstrom übertragen werden.

24. Verfahren, nach einem der Ansprüche 22 und 23, nach dem auch in regelmäßigen Intervallen Synchronisierungssignale übertragen werden, durch die die Steuerung der Anzeige der Maskenbilder durch die interaktive Anwendung ermöglicht wird..

25. Verfahren nach einem der Ansprüche 22 bis 24, nach dem zeitliche Wartelücken definiert werden, während denen die interaktive Anwendung auf ein Validierungszeichen wartet, das es ermöglicht, ein anzuzeigendes Maskenbild zu bestimmen.

## Claims

1. Method of interactive television, between a broadcasting central site (1) and a plurality of local sites equipped with television receivers (6) provided with decoders (5) to receive digitally encoded video streams (10), **characterized in that** this method comprises steps of :
- transmission, from the broadcasting central site, of a video stream corresponding, in certain predetermined time slots, to a spatial group of several simultaneous video sequences (43, 44, 45), the displayed image resulting from this group comprising at least as many zones as video sequences, and
- at each local receiving site, masking steps of one or more of the zones of the displayed image by means of masking images (42, 46, 47, 50), these masking steps being synchronised with predetermined time slots and being carried out within the decoder (5) in response to validation instructions transmitted by means of remote control.

2. Method according to claim 1, **characterized in that** masking steps are carried out by means of an interactive application included within the decoder's storage means.

3. Method according to claim 2, **characterized in that** the interactive application is downloaded into the decoder's storage means from the start of broadcasting of the video stream.

4. Method according to claim 2 or 3, **characterized in that** the predetermined time slots are predefined in the interactive application.

5. Method according to any one of the claims 1 to 3, **characterized in that** predetermined time slots are defined by synchronization signals transmitted instantaneously by the broadcasting central site.

6. Method according to any one of preceding claims, **characterized in that** the masking images include fixed low-capacity images.

7. Method according to any one of preceding claims, **characterized in that** the masking images are downloaded into the decoder's storage means from the start of broadcasting of the video stream.

8. Method according to any one of preceding claims, **characterized in that** the video stream is broadcast via a satellite.

9. Method according to any one of claims 1 to 7, **characterized in that** the video stream is broadcast via a cable network.

10. Method according to any one of claims 1 to 7, **characterized in that** the video stream is broadcast via a digital terrestrial network.

11. Method according to any one of claims 1 to 7, **characterized in that** the video stream is broadcast via an Internet type communication network.

12. Method according to any one of preceding claims, **characterized in that** the video stream also include, for each video sequence, at least one sound track.

13. Method according to claim 12, **characterized in that** the audio transmission of the sound track is blocked, which sound track relates to the video sequence, of which the zone of the displayed image is masked by a masking image.

14. Method according to any one of preceding claims, **characterized in that** validation instructions are subsequently transmitted to the broadcasting central site.

15. Device to receive a video stream of a television transmission from a broadcasting central site (1), and to allow display, on a television screen (6), of a displayed image resulting from the transmission of the video stream (10), **characterized in that** this device includes storage means containing :
- a plurality of masking images (42, 46, 47, 48, 50),
- a validation instruction originating from the remote control means,
- an interactive application capable of managing the display of these masking images to mask at least one video sequence out of a number of video sequences (43, 44, 45) intended to be displayed on the screen simultaneously, in accordance with the validation instruction and a predetermined time slot.

16. Device according to claim 15, **characterized in that** it further comprises connection means for connection to the broadcasting central site and for transmitting the validation instruction.

17. Device according to claim 15 or 16, **characterized in that** it further comprises means of reception of time slots transmitted by the central site and means of synchronization of the masking images to these time slots.

18. System of digital television for the implementation of a method according to one of any preceding claims, comprising:
- a broadcasting central site (1), broadcasting a video stream (10) to a plurality of television receivers (6) and
- a decoder (5) for each television receiver to forward the video stream to the corresponding television receiver,
**characterized in that** each decoder is capable of managing the display of masking images (42, 46, 47, 50), in order to mask at least one video sequence out of a plurality of video sequences (43, 44, 45) intended to be displayed on the screen simultaneously, in accordance with the validation instruction and a predetermined time slot.

19. System according to claim 18, **characterized in that** the decoder is an internal element of the television receiver.

20. Method for formatting a video stream (10) intended to be transmitted by a broadcasting central site (1) to a plurality of decoders (5) for an interactive broadcast, implemented in a system according to claim 18 or 19, **characterized in that** the video stream is subdivided into a plurality of time slots; in certain predetermined time slots, the video stream consists of a group of a plurality of video sequences (43, 44, 45) intended to be displayed simultaneously on a screen; masking images (42, 46, 47, 50) are prepared, which are capable of masking at least one of these video sequences in accordance with the predetermined time slots and in response to a validation instruction.

21. Method according to claim 20, **characterized in that** a specific sound track is associated with each video sequence.

22. Method according to one of claims 20 and 21, **characterized in that** a data stream is also broadcast, into which, from the start of the broadcast, a downloadable interactive application is integrated into each decoder, which application is capable of managing the display of the masking images.

23. Method according to claim 22, **characterized in that** time slots and masking images are transmitted via the data stream.

24. Method according to one of claims 22 and 23, **characterized in that** also broadcast, at regular time intervals, are synchronisation signals enabling the interactive application to manage the display of the masking images.

25. Method according to one of claims 22 to 24, **characterized in that** also provided are waiting time slots, during which the interactive application remains in wait for a validation instruction making it possible to determine the masking image to be displayed.
